# EUROPEAN PATENT APPLICATION

(11) **EP 4 826 097 A1**
(43) Date of publication of application: **21.10.2026**
(21) Application number: 24904169.0
(22) Date of filing: 05.12.2024
(51) Int. Cl.: C22C 38/58, C22C 38/42, C22C 38/00, C22C 38/44, C22C 38/48, C22C 38/54, C21D 8/02, C21D 9/46

(54) **COLD-ROLLED STEEL SHEET AND MANUFACTURING METHOD THEREOF**

(30) Priority: 15.12.2023 KR 20230183790
(71) Applicant: POSCO Co., Ltd, Gyeongsangbuk-do 37859 (KR)
(72) Inventor: NA, Hyun-Taek, Gwangyang-si, Jeollanam-do 57807 (KR); SEONG, Hwan-Goo, Gwangyang-si, Jeollanam-do 57807 (KR); LEE, Jae-Hoon, Gwangyang-si, Jeollanam-do 57807 (KR); KIM, Jae-Joong, Gwangyang-si, Jeollanam-do 57807 (KR)
(74) Representative: Meissner Bolte Partnerschaft mbB
(86) International application number: PCT/KR2024/019799
(87) International publication number: WO 2025/127604

(57) **Abstract**

The present invention relates to a cold rolled steel sheet and a manufacturing method therefor and, more particularly, to a high-strength cold rolled steel sheet having excellent hardness and ductility, and a manufacturing method therefor.

## Description

### Technical Field

The present disclosure relates to a cold-rolled steel sheet and a method of manufacturing the same, and more particularly, to a high-strength cold-rolled steel sheet having excellent hardness and ductility and a method of manufacturing the same.

### Background Art

Recently, with the goal of reducing global greenhouse gas emissions, a power source of automobiles has been shifted from internal combustion engines to electric motors. Furthermore, in the electric vehicle market, competition for lightening has been intensified to increase a driving range per charge. Accordingly, aluminum alloys, which have a lower density compared to steel materials, has been actively adopted to minimize the weight of conventional battery pack housing components.

However, driven by mass production following the popularization of electric vehicles and the decline in battery prices, automakers and parts manufacturers have expanded the adoption of steel materials offering relatively lower material costs, lower carbon emissions in terms of life cycle assessment (LCA), and excellent resistance to thermal runaway.

Patent Document 1 shows an example of applying steel materials to a bottom plate of a battery housing to protect a battery cell. In terms of collision stability, this technology employs ultra-high strength steel with a tensile strength of 980 to 1800 MPa grade to protect battery cells from impacts occurring in a lower portion of a vehicle body during operation. While such ultra-high strength steel is effective not only for collision stability but also for supporting heavy battery packs, the ultra-high strength steel contains a large amount of ferroalloys to ensure high strength, resulting in high manufacturing costs due to complex heat treatment processes, and it is not easy to secure usable properties, such as weldability.

Patent Document 2 describes a technology for providing cold-rolled steel sheet and hot-dip galvanized steel sheets for use as structural members or reinforcing materials in automobile bodies, having a tensile strength of 490 MPa or more, a product of tensile strength (TS) and elongation (El) of 15,000 MPa% or more, and excellent plating characteristics, and describes, as main technology, securing plating properties by suppressing the formation of oxidative inclusions on a surface layer portion through the addition of Sb to form a uniform enrichment layer at an extreme surface layer portion. However, the Sb content range presented in the document for forming such an Sb enrichment layer results in insufficient solid solution strengthening and transformation strengthening effects to realize hardness uniformity in the surface layer portion, which is necessary to ensure collision resistance against external factors, such as stone chipping that may occur during vehicle operation. Consequently, there is a problem of excessive manufacturing costs due to the inevitable addition of a large amount of Sb, and excessive Sb addition may instead lead to a deterioration in plating adhesion.

Patent Document 3 describes a technology for manufacturing hot-dip galvanized steel sheets or alloyed hot-dip galvanized steel sheets with a tensile strength of 590 MPa grade or higher, exhibiting excellent fatigue characteristics and collision resistance. In this disclosure, to suppress surface layer portion softening that typically occurs during manufacturing, temper rolling is performed after hot rolling to increase precipitation formation sites within a structure of the surface layer portion, thereby securing hardness of the surface layer portion by implementing an additional precipitation strengthening effect. However, this technology requires the addition of expensive alloying elements, such as Nb, Ti, Mo, and V, and if the distribution of these alloying elements in the surface layer portion is not uniform, there is a problem in which plating performance deteriorates, such as the occurrence of non-plating. Furthermore, relying solely on precipitation strengthening effect for surface layer hardness may cause the formation of transverse cracking during part processing.
(Patent Document 1) Korean Application Publication No. 10-2023-0032302 (Published March 7, 2023)
(Patent Document 2) Korean Patent No. 10-0711358 (Published April 27, 2007)
(Patent Document 3) Korean Application Publication No. 10-2011-0110370 (Published October 6, 2011)

### Summary of Invention

### Technical Problem

An aspect of the present disclosure is to provide a cold-rolled steel sheet and a method of manufacturing the same.

Another aspect of the present disclosure is to provide a high-strength cold-rolled steel sheet with excellent hardness and ductility and a method of manufacturing the same.

The problems to be solved by the present disclosure are not limited to the above contents. A person skilled in the art will have no difficulty understanding additional problems to be solved by the present disclosure from the overall contents of this specification.

### Solution to Problem

According to an aspect of the present disclosure, a cold-rolled steel sheet comprises: by wt%, 0.050 to 0.150% of C, 0.010 to 1.100% of Si, 1.000 to 3.000% of Mn, 0.001 to 0.050% of P, 0.001 to 0.020% of S, 0.020 to 0.300% of Cr, 0.010 to 0.100% of Ni, 0.01 to 0.10% of Sol.Al, 0.010 to 0.400% of Cu, and 0.0010 to 0.0100% of N, a remainder of Fe and unavoidable impurities,
wherein an R1 value defined in Relational Expression 1 below is 2.000 to 4.000, and
a microstructure includes, in area%, 65 to 80% ferrite and a residual structure.

   [Relatioanl Expression 1] $R 1 = 17 \left(\left[Cr\right]+\left[Ni\right]\right) / \left[Si\right]$
(In Relational Expression 1, [Cr], [Ni], and [Si] are the wt% of each element.)

The cold-rolled steel sheet may further comprise, by wt%, a total of 1.0% or less of one or more of Mo, Nb, and Sb.

The cold-rolled steel sheet may further comprise, by wt%, 0.003% or less of B.

An R2 value defined in Relational Expression 2 may be 0.150 to 0.500. [Relatioanl Expression 2] $R 2 = \left(\left[{Cr}_{0.5 μm}\right]+\left[{Ni}_{0.5 μm}\right]\right) - \left(\left[{Cr}_{1 / 4}\right]-\left[{Ni}_{1 / 4}\right]\right)$
(in Relational Expression 2, [Cr_{0.5µm}] and [Ni_{0.5µm}] are the maximum wt% of each element in a region from a surface of the steel sheet to a point of 0.5µm in a thickness direction, and [[Cr_{1/4}] and [Ni_{1/4}] are average wt% of each element at a point of 1/4 in the thickness direction of the steel sheet.)

The residual structure may include one or more of martensite and bainite.

The residual structure may include, by area%, 10 to 35% of martensite and bainite.

The cold-rolled steel sheet may have a tensile strength (TS) of 590 MPa or more, and a product of tensile strength (TS) and elongation (El) may be 145000 MPa% or more.

The cold-rolled steel sheet may have a minimum surface hardness value of 170 Hv or higher.

The cold-rolled steel sheet may further include a zinc plating layer on one surface.

According to an aspect of the present disclosure, a method of manufacturing a cold-rolled steel sheet comprises: reheating a steel slab comprising, by wt%, 0.050 to 0.150% of C, 0.010 to 1.100% of Si, 1.000 to 3.000% of Mn, 0.001 to 0.050% of P, 0.001 to 0.020% of S, 0.020 to 0.300% of Cr, 0.010 to 0.100% of Ni, 0.01 to 0.10% of Sol.Al, 0.010 to 0.400% of Cu, and 0.0010 to 0.0100% of N, a remainder of Fe and unavoidable impurities and having an R1 value of 2.000 to 4.000 as defined in Relational Expression 1 below;
hot rolling the reheated steel slab;
coiling the hot-rolled steel sheet;
cold-rolling the coiled steel sheet; and
annealing by heating and maintaining the cold-rolled steel sheet within a temperature range of Ac1 to Ac3+100°C, and then cooling the steel sheet to 350°C or lower at a line speed of 70 to 200 mpm.

   [Relatioanl Expression 1] $R 1 = 17 \left(\left[Cr\right]+\left[Ni\right]\right) / \left[Si\right]$
(In Relational Expression 1, [Cr], [Ni], and [Si] are the wt% of each element.)

The steel slab may further comprise, by wt%, one or more of Mo, Nb, and Sb in a total amount of 1.0% or less.

The steel slab may further comprise, by wt%, 0.003% or less of B.

The reheating may be performed in a temperature range of 1000 to 1350°C,
the hot rolling may be performed at a finishing hot rolling temperature of 800 to 1000°C,
the coiling may be performed in a temperature range of 550 to 650°C, and
the cold rolling may be performed with a reduction rate of 30% or more.

The method may further include galvanizing the annealed steel sheet.

### Advantageous Effects of Invention

According to an embodiment of the present disclosure, the cold-rolled steel sheet and the method of manufacturing the same may be provided.

According to an embodiment of the present disclosure, the high-strength cold-rolled steel sheet having excellent hardness and ductility and the method of manufacturing the same may be provided.

According to an embodiment of the present disclosure, the high-strength cold-rolled steel sheet with excellent hardness and ductility, which may be used as a structural member or reinforcing material comprising a battery pack housing and vehicle body of an automobile, and the method of manufacturing the same may be provided.

According to an embodiment of the present disclosure, the high-strength cold-rolled steel sheet and the method of manufacturing the same may be provided, which facilitates part forming by improving resistance to continuous impacts applied to a vehicle, such as stone chipping, from the outside, that may occur during driving, while simultaneously securing excellent ductility compared to ultra-high-strength steel.

The various and beneficial advantages and effects of the present disclosure are not limited to the description and will be more easily understood in the process of describing specific embodiments of the present disclosure.

### Brief Description of Drawings

FIG. 1 is a graph illustrating the sum of Cr and Ni contents according to the depth in the thickness direction from the surfaces of the steel sheets of Inventive Example 5, Comparative Example 1, and Comparative Example 2 according to an embodiment of the present disclosure.
FIG. 2 illustrates the distribution of minimum surface hardness values for the product of tensile strength and elongation of Inventive Example and Comparative Example according to an embodiment of the present disclosure.

### Best Mode for Invention

Hereinafter, embodiments of the present disclosure are described. Embodiments of the present disclosure may be modified in various forms, and the scope of the present disclosure should not be interpreted as being limited to the embodiments described below. These embodiments are provided to further describe the present disclosure in detail to those skilled in the art to which the present disclosure pertains.

The present disclosure is described in detail below.

A steel composition of the present disclosure will be described in detail below.

Unless otherwise specifically stated in the present disclosure, % indicating the content of each element is based on weight.

A cold-rolled steel sheet according to an embodiment of the present disclosure may comprise, by wt%, 0.050 to 0.150% of C, 0.010 to 1.100% of Si, 1.000 to 3.000% of Mn, 0.001 to 0.050% of P, 0.001 to 0.020% of S, 0.020 to 0.300% of Cr, 0.010 to 0.100% of Ni, 0.01 to 0.10% of Sol.Al, 0.010 to 0.400% of Cu, and 0.0010 to 0.0100% of N.

### Carbon (C): 0.050 to 0.150%

Carbon (C) is the most economical and effective element for strengthening steel. As an addition amount thereof increases, the fractions of martensite and bainite may increase, which may increase tensile strength. If the carbon (C) content is less than 0.050%, it may be difficult to sufficiently secure the low-temperature transformation phase. According to an embodiment of the present disclosure, the C content may be 0.060% or more. On the other hand, if the content exceeds 0.150%, the formation of coarse carbides or pearlite may be easy, which may result in inferior formability and weldability. According to an embodiment of the present disclosure, the carbon (C) content may be 0.140% or less.

### Silicon (Si): 0.010 to 1.100%

Silicon (Si) deoxidizes a molten steel and has a solid solution strengthening effect. However, if the content is less than 0.010%, the solid solution strengthening effect may be small. According to an embodiment of the present disclosure, the Si content may be 0.030% or more. On the other hand, if the content exceeds 1.100%, there may be a problem of impairing plating properties by forming oxides on a steel surface. According to an embodiment of the present disclosure, the content may be 1.000% or less.

### Manganese (Mn): 1.000 to 3.000%

Manganese (Mn), like Si, has a solid solution strengthening effect and may also increase the hardenability of steel, thereby facilitating the formation of martensite and bainite. However, if the content is less than 1.000%, it may be difficult to sufficiently secure the effects resulting from the addition. According to an embodiment of the present disclosure, the content may be 1.200% or more. On the other hand, if the content exceeds 3.000%, the hardenability may increase significantly, and as a large amount of martensite structure is formed, it may become difficult to secure intended ductility. According to an embodiment of the present disclosure, the content may be 2.800% or less.

### Phosphorus (P): 0.001 to 0.050%

Phosphorus (P) is an element that may be included as an impurity in steel, and the content of P may be limited to 0.050% or less. If the phosphorus (P) content exceeds 0.050%, there may be a problem in which weldability deteriorates and the risk of steel brittleness increases. On the other hand, if the content is to be controlled to less than 0.001%, there is a problem in which refining costs increase rapidly.

### Sulfur (S): 0.001 to 0.020%

Sulfur (S) is an element that may be included as an impurity in steel, and the content of S may be limited to 0.020% or less. If the sulfur (S) content exceeds 0.020%, there is a high possibility that weldability will be impaired and the ductility of the steel sheet will also deteriorate. According to an embodiment of the present disclosure, the content may be 0.010% or less. Meanwhile, if the content is to be controlled to less than 0.001%, there is a problem in that refining costs increase rapidly.

### Chromium (Cr): 0.020 to 0.300%

Chromium (Cr) plays a role in delaying the formation of ferrite during cooling and helping to form martensite and bainite. However, if the content is less than 0.020%, no effect may be obtained from the addition. According to an embodiment of the present disclosure, the content may be 0.030% or more. On the other hand, if the content exceeds 0.300%, the martensite structure may be excessively formed, which may result in inferior elongation. According to an embodiment of the present disclosure, the content may be 0.250% or less.

### Nickel (Ni): 0.010 to 0.100%

Nickel (Ni) plays a role in delaying the formation of ferrite during cooling and helping to form martensite and bainite. However, if the content is less than 0.010%, the effect of the addition cannot be obtained. According to an embodiment of the present disclosure, nickel (Ni) may be 0.020% or more. Meanwhile, if the nickel (Ni) content exceeds 0.100%, a martensite structure may be excessively formed, which may result in inferior ductility. According to an embodiment of the present disclosure, the content of Ni may be 0.098% or less.

### Aluminum (Sol.Al): 0.01 to 0.10%

Aluminum (Sol.Al) is a component added mainly for deoxidation, and if the content of Sol.Al is less than 0.01%, there is a risk that the effect of the addition will be insufficient. According to an embodiment of the present disclosure, the content may be 0.02% or more. Meanwhile, if the content exceeds 0.10%, Sol.Al may combine with nitrogen to form AlN, which makes it prone to corner cracks in a slab during continuous casting and raises a concern about defects caused by the formation of inclusions. According to an embodiment of the present disclosure, the content may be 0.08% or less.

### Copper (Cu): 0.010 to 0.400%

Copper (Cu) is an element useful for ensuring weather resistance and improving hydrogen embrittlement. If the copper (Cu) content is less than 0.010%, there is a concern that the effects may be insufficient. According to an embodiment of the present disclosure, the content may be 0.012% or more. Meanwhile, if the content exceeds 0.400%, there is a concern that a large amount of Scab defects may occur due to liquefaction of grain boundaries on the slab surface. According to an embodiment of the present disclosure, the content may be 0.380% or less.

### Nitrogen (N): 0.0010 to 0.0100%

Nitrogen (N) is an element that may be included as an impurity in steel, and the content of N may be limited to 0.0100% or less. If the content exceeds 0.0100%, the risk of steel brittleness may increase, and there may be a problem with degraded continuous casting quality due to the excessive precipitation of AlN through reaction with Al. On the other hand, if the content is to be controlled to less than 0.0010%, there may be a problem with a sharp increase in refining costs.

The steel of the present disclosure may comprise a remainder of iron (Fe) and unavoidable impurities in addition to the composition described above. Since unavoidable impurities may be unintentionally incorporated during the general manufacturing process, they cannot be excluded. As such impurities are known to any skilled in the art of conventional steel manufacturing, all details thereof are not specifically mentioned in this specification.

According to an embodiment of the present disclosure, one or more of Mo, Nb, and Sb may be further included in a total amount of 1.0% or less.

Molybdenum (Mo) and niobium (Nb) are elements that increase hardenability and contribute to the formation of martensite and bainite, and antimony (Sb) is an element effective in ensuring plating properties by forming a uniform enrichment layer on a surface layer. However, if the sum of the contents of these elements exceeds 1.0%, there is a problem of excessively increasing manufacturing costs. In particular, if excessive surface enrichment is caused, it may lead to a problem of degrading plating adhesion, and therefore, the content may be controlled so as not to exceed the amount. According to an embodiment of the present disclosure, the content may be 0.9% or less.

According to an embodiment of the present disclosure, 0.003% or less of boron (B) may be further included.

Boron (B) is an element increasing hardenability and contributing to the formation of martensite and bainite. However, if its content exceeds 0.003%, there is a problem of excessively increasing manufacturing costs, and in particular, if excessive surface enrichment is caused, it may lead to a problem of degrading plating adhesion. According to an embodiment of the present disclosure, the value may be 0.002% or less.

The cold-rolled steel sheet according to an embodiment of the present disclosure may have an R1 value defined in Relational Expression 1 of 2.000 to 4.000. [Relatioanl Expression 1] $R 1 = 17 \left(\left[Cr\right]+\left[Ni\right]\right) / \left[Si\right]$
(In the Relational Expression, [Cr], [Ni], and [Si] are wt% of each element.)

According to an embodiment of the present disclosure, hardness and ductility may be secured by controlling the relationship between the contents of Cr and Ni, which are hardenable elements, through Relational Expressions 1 and 2.

Specifically, according to an embodiment of the present disclosure, by utilizing hardenable alloy elements, solid solution and transformation strengthening effects may be introduced within a certain depth from directly below a scale layer of a surface layer portion to prevent a decrease in surface hardness.

If an R1 value defined in Relational Expression 1 is less than 2.000, there may be a problem in that a sufficient transformation strengthening effect cannot be secured in the surface layer. According to an embodiment of the present disclosure, the R1 value may be 2.200 or higher. On the other hand, if the value exceeds 4.000, there may be a problem of reduced ductility due to excessive transformation strengthening effect and carbide precipitation. According to an embodiment of the present disclosure, the R1 value may be 3.800 or lower.

The cold-rolled steel sheet according to an embodiment of the present disclosure may have an R2 value of 0.150 to 0.500 as defined in Relational Expression 2 below. [Relatioanl Expression 2] $R 2 = \left(\left[{Cr}_{0.5 μm}\right]+\left[{Ni}_{0.5 μm}\right]\right) - \left(\left[{Cr}_{1 / 4}\right]-\left[{Ni}_{1 / 4}\right]\right)$
(In Relational Expression 2, [Cr_{0.5µm}] and [Ni_{0.5µm}]are the maximum wt% of each element in a region up to 0.5µm from the surface of the steel sheet in the thickness direction, and [Cr_{1/4}] and [Ni_{1/4}] are the average wt% of each element at a 1/4 point of the steel sheet in the thickness direction.)

When the surface layer portion of the steel sheet reacts with oxygen to undergo phase transformation behavior, secondary phase transformation may be delayed. As a result, a phenomenon in which hardness of the surface layer portion decreases locally may occur, which may lead to a decrease in formability. According to an embodiment of the present disclosure, the surface layer portion may refer to a region up to 0.5µm from the surface of the steel sheet in the thickness direction.

According to an embodiment of the present disclosure, by appropriately enriching Cr and Ni in the surface layer portion of the steel sheet through Relational Expression 2, a phenomenon of localized hardness reduction may be prevented. That is, according to an embodiment of the present disclosure, by controlling the maximum values of the Cr and Ni contents in the surface layer portion of the steel sheet and controlling the average values of the Cr and Ni contents at the 1/4 point of the steel sheet in the thickness direction, the phenomenon of delayed secondary phase transformation may be prevented by securing hardenable elements capable of forming a secondary phase in the surface layer portion. Therefore, by controlling Relational Expression 2 , localized hardness reduction in the surface layer portion may be prevented.

If the R2 value defined in Relational Expression 2 is less than 0.150, it may be difficult to secure the hardness proposed in the present disclosure due to the formation of coarse ferrite occurring locally in a region from the surface of the steel sheet to a point of 0.5 µm in a thickness center direction. According to an embodiment of the present disclosure, the R2 value may be 0.170 or greater. On the other hand, if the value exceeds 0.500, there may be a problem causing a decrease in the ductility of the steel sheet due to excessive enrichment in the surface layer. According to an embodiment of the present disclosure, the value may be 0.450 or less.

According to an embodiment of the present disclosure, the sum of the maximum values of Cr and Ni contents in the region from the surface of the steel sheet to the point of 0.5 µm in the thickness direction may be 0.1% or more. According to an embodiment of the present disclosure, the value may be 0.2% or more. According to an embodiment of the present disclosure, the sum of the maximum values of Cr and Ni contents in the region from the surface of the steel sheet to the point of 0.5 µm in the thickness direction may be 0.9% or less. According to an embodiment of the present disclosure, the value may be 0.8% or less.

A steel microstructure of the present disclosure is described in detail below.

Unless otherwise specifically stated in the present disclosure, % indicating the fraction of the microstructure is based on area.

The microstructure of a cold-rolled steel sheet according to an embodiment of the present disclosure may include 65 to 80% of ferrite and a residual structure, by area%. According to an embodiment of the present disclosure, the residual structure may include one or more of martensite and bainite. According to an embodiment of the present disclosure, the residual structure may include 10 to 35 % of martensite and a remainder of bainite.

If the ferrite fraction is less than 65%, there may be a problem in failing to secure the product of tensile strength and elongation proposed in the present disclosure due to a decrease in ductility. According to an embodiment of the present disclosure, the ferrite fraction may be 70% or more. On the other hand, if the fraction exceeds 80%, there may be a problem in failing to secure sufficient strength due to a decrease in the fractions of bainite and martensite. According to an embodiment of the present disclosure, the ferrite fraction may be 78% or less.

If the martensite fraction in the residual structure is less than 10%, there may be a problem in securing a desired level of strength. According to an embodiment of the present disclosure, the fraction may be 11% or more. On the other hand, if the fraction exceeds 35%, there may be a problem of reduced ductility due to the excessive formation of secondary phases. According to an embodiment of the present disclosure, tempered martensite is not intentionally included, but may inevitably be formed in small amounts, and this may be included in the martensite fraction.

Bainite may be included as a residual structure excluding martensite. A bainite fraction is not particularly limited, but according to an embodiment of the present disclosure, it may be 20% or less. If the bainite fraction exceeds 20%, there may be a problem in being unable to secure ductility due to the reduction in the ferrite fraction. According to an embodiment of the present disclosure, the bainite fraction may be 19% or less. According to an embodiment of the present disclosure, the bainite fraction may be 18% or less. Meanwhile, although the lower limit of the bainite fraction is not particularly limited, the bainite fraction may be 0% according to an embodiment of the present disclosure. According to an embodiment of the present disclosure, the bainite fraction may be 1% or more.

According to an embodiment of the present disclosure, martensite and bainite may be distinguished based on the degree of lath development of a sub-structure, and the fractions may be expressed by distinguishing between the two structures based on a crystal orientation relationship.

In addition, the microstructure of the steel sheet according to an embodiment of the present disclosure may include ferrite, martensite, and bainite, but may also include other unavoidable structures. The unavoidable structures may include residual austenite, pearlite, etc.

The cold-rolled steel sheet according to an embodiment of the present disclosure may have a tensile strength (TS) of 590 MPa or more, a product of tensile strength (TS) and elongation (El) of 145,000 MPa% or more, and a minimum surface hardness of 170 Hv or more.

The cold-rolled steel sheet according to an embodiment of the present disclosure may include a plating layer formed on one surface. The plating layer may be one of a zinc plating layer, a zinc alloy plating layer, or an alloyed zinc plating layer.

Hereinafter, a method of manufacturing steel according to the present disclosure will be described in detail.

A cold-rolled steel sheet according to an embodiment of the present disclosure may be manufactured by reheating, hot rolling, coiling, cold rolling, and annealing a steel slab satisfying the alloy composition described above.

### Reheating

A steel slab satisfying the alloy composition according to an embodiment of the present disclosure may be reheated to a temperature range of 1000 to 1350°C.

The steel slab may be manufactured by melting steel, and it does not matter whether the melting is performed by any of a converter method and an electric furnace method.

When reheating as described above, if the temperature is below 1000°C, the formation of a scale layer due to the selective oxidation of Fe may not be easy, so a problem may arise in which the level of Cr and Ni contents immediately below the scale layer proposed in the present disclosure cannot be sufficiently implemented. On the other hand, if the temperature exceeds 1350°C, there may be a problem in which a large amount of surface scale is generated.

### Hot Rolling

The reheated steel slab may be hot rolled at a finishing hot rolling temperature of 800 to 1000°C.

If the finishing hot rolling temperature is below 800°C, there is a concern that a rolling load may increase significantly. On the other hand, if the temperature exceeds 1000°C, there may be a problem in which thermal fatigue of a rolling roll increases significantly.

### Coiling

The hot-rolled steel sheet described above may be coiled at a temperature range of 550 to 650°C.

If the coiling temperature is controlled to below 550°C, excessive martensite and bainite may be formed within the hot-rolled steel sheet, which may increase the rolling load during subsequent cold rolling. On the other hand, if the coiling temperature exceeds 650°C, excessive scale formation may cause plating properties to be impaired. According to an embodiment of the present disclosure, pickling may be additionally performed by a general method after coiling, and the oxide layer may be removed through the pickling.

### Cold Rolling

The coiled steel sheet described above may be cold-rolled with a reduction rate of 30% or more.

While the reduction rate is not specifically limited during cold rolling, according to an embodiment of the present disclosure, cold rolling may be performed with a reduction rate of 30% or more to suppress the formation of coarse ferrite during recrystallization in a subsequent annealing process.

### Annealing

The cold-rolled steel sheet may be subjected to annealing by heating and maintaining the sheet in a temperature range of Ac1 to Ac3 + 100°C and then cooling to 350°C or lower at a line speed of 70 to 200 mpm.

During annealing, if a heating temperature is below Ac1, a large amount of soft polygonal ferrite may be formed, which may result in a decrease in strength. On the other hand, if the heating temperature exceeds Ac3 + 100°C, it may be difficult to secure sufficient ferrite, leading to a decrease in ductility.

If the line speed (L/S) exceeds 200 mpm, the nonuniformity of martensite and bainite formation may increase, which may lead to a deterioration in the shape of the steel sheet, such as a wave phenomenon, and may result in sheet breakage due to sheet deflection. Meanwhile, if the line speed is below 70 mpm, a decrease in productivity may occur.

If a cooling end temperature exceeds 350°C, there is a concern that a desired level of strength cannot be secured because a sufficient martensite fraction is not secured. [Equation] $Ac 1 = 723 - 10.7 \left[Mn\right] - 16.9 \left[Ni\right] + 29.1 \left[Si\right] + 16.9 \left[Cr\right]$
(In Equation, [Mn], [Ni], [Si], and [Cr] are wt% of each element.)
   $Ac 3 = 910 - 203 √ \left(\left[C\right]\right) - 15.2 \left[Ni\right] + 44.7 \left[Si\right] + 31.5 \left[Mo\right]$
(In Equation, [C], [Ni], [Si], and [Mo] are wt% of each element.)

According to an embodiment of the present disclosure, a plating process of plating the annealed steel sheet may be additionally performed as needed. According to an embodiment of the present disclosure, a zinc plating or zinc alloy plating process may be additionally performed, and the plating method is not particularly limited. According to an embodiment of the present disclosure, electro-galvanizing may be performed. According to an embodiment of the present disclosure, hot-dip galvanizing may be performed. In addition, if necessary, an alloying treatment process may be additionally performed to alloy the zinc-plated steel sheet.

### Mode for Invention

Hereinafter, the present disclosure will be described in more detail through the following examples. However, it should be noted that the following examples are intended only to illustrate and explain the present disclosure in more detail and are not intended to limit the scope of the rights of the present disclosure.

### (Example)

Steel slabs having the alloy compositions disclosed in Table 1 below were manufactured. Cold-rolled steel sheets were manufactured from each of the prepared steel slabs using the conditions shown in Table 2 below. At this time, the reheating temperature was applied uniformly at 1200°C, and the reduction rate during cold rolling was applied at 50%.

**[Table 1]**

| Ste el gra de | Alloy composition (wt%) | | | | | | | | | | | Relati onal Expres sion 1 |
|---|---|---|---|---|---|---|---|---|---|---|---|---|
| | C | Si | Mn | P | S | Cr | Ni | Sol.A l | Cu | N | Addition al element | R1 |
| A | 0.090 | 0.370 | 1.750 | 0.011 | 0.002 | 0.041 | 0.025 | 0.03 | 0.080 | 0.0026 | - | 3.032 |
| B | 0.086 | 0.381 | 1.731 | 0.011 | 0.006 | 0.031 | 0.025 | 0.03 | 0.060 | 0.0034 | - | 2.499 |
| C | 0.070 | 1.000 | 2.300 | 0.010 | 0.006 | 0.052 | 0.080 | 0.05 | 0.090 | 0.0030 | Mo+Sb0.5 | 2.244 |
| D | 0.070 | 1.000 | 2.300 | 0.010 | 0.006 | 0.112 | 0.031 | 0.03 | 0.220 | 0.0030 | - | 2.431 |
| E | 0.070 | 1.000 | 2.300 | 0.010 | 0.006 | 0.112 | 0.097 | 0.06 | 0.370 | 0.0030 | - | 3.553 |
| F | 0.090 | 0.360 | 1.810 | 0.012 | 0.007 | 0.172 | 0.124 | 0.03 | 0.370 | 0.0034 | - | 13.978 |
| G | 0.087 | 0.360 | 1.710 | 0.010 | 0.011 | 0.002 | 0.002 | 0.05 | 0.090 | 0.0031 | - | 0.189 |
| H | 0.086 | 0.381 | 1.731 | 0.011 | 0.006 | 0.041 | 0.025 | 0.03 | 0.085 | 0.0034 | - | 2.945 |
| I | 0.086 | 0.381 | 1.731 | 0.011 | 0.006 | 0.041 | 0.025 | 0.06 | 0.105 | 0.0034 | - | 2.945 |
| J | 0.086 | 0.381 | 1.731 | 0.011 | 0.006 | 0.041 | 0.025 | 0.05 | 0.110 | 0.0034 | - | 2.945 |

[Relatioanl Expression 1] $R 1 = 17 \left(\left[Cr\right]+\left[Ni\right]\right) / \left[Si\right]$
(In Equation, [Cr], [Ni], and [Si] are wt% of each element.)

**[Table 2]**

| Speci es No. | Steel grade | Hot rolling | Coiling | Ac1 | Ac3 | Annealing | | |
|---|---|---|---|---|---|---|---|---|
| | | Finishing temperature (°C) | Tempera ture (°C) | | | Temperat ure (°C) | Line speed (mpm) | Cooling temperatur e (°C) |
| 1 | A | 890 | 580 | 715 | 865 | 800 | 130 | 280 |
| 2 | B | 980 | 580 | 716 | 867 | 805 | 120 | 290 |
| 3 | C | 980 | 580 | 727 | 900 | 805 | 120 | 290 |
| 4 | D | 905 | 600 | 729 | 901 | 815 | 150 | 300 |
| 5 | E | 905 | 580 | 728 | 900 | 815 | 150 | 310 |
| 6 | F | 895 | 560 | 715 | 863 | 805 | 130 | 290 |
| 7 | G | 905 | 590 | 715 | 866 | 815 | 150 | 280 |
| 8 | H | 890 | 580 | 716 | 867 | 800 | 65 | 290 |
| 9 | I | 900 | 570 | 716 | 867 | 980 | 130 | 290 |
| 10 | J | 900 | 570 | 716 | 867 | 700 | 130 | 300 |

[Equation] 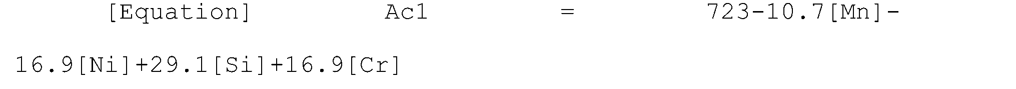 Ac1 = 723-10.7[Mn]-16.9[Ni]+29.1[Si]+16.9[Cr]
(In Equation, [Mn], [Ni], [Si] and [Cr] are wt% of each element.)
   $Ac 3 = 910 - 203 √ \left(\left[C\right]\right) - 15.2 \left[Ni\right] + 44.7 \left[Si\right] + 31.5 \left[Mo\right]$
(In Equation, [C], [Ni], [Si] and [Mo] are wt% of each element.)

The behavior of Cr and Ni contents at 50 locations was analyzed using a glow discharge spectrometer (GDS) from the surface of the manufactured cold-rolled steel sheet to a depth of 1 µm in the thickness direction, and the average value was derived by measuring the sum of the maximum values of Cr and Ni contents in the region up to a point of 0.5 µm from the surface of the steel sheet. In addition, the average value of Cr and Ni elemental contents at a point of 1/4 from the surface of the steel sheet in the thickness direction was calculated after measuring the Cr and Ni elemental contents at 50 locations using an SEM-EDS technique. Using these two values, the R2 value of Relational Expression 2 was calculated and is shown in Table 3 below.

The microstructure fraction was derived by simulating the manufacturing conditions applied during the production of the cold-rolled steel sheet using a dilatometer to determine the ferrite and austenite fractions. Then, the final cold-rolled steel sheet was etched using a Nital etching method, compared with results analyzed at magnifications of 1000 to 5000 using a scanning electron microscope (SEM) and an image analyzer, and then described.

In addition, the tensile material and hardness of the cold-rolled steel sheet were measured and are shown in Table 3 below. Here, TS and El represent tensile strength and fracture elongation, respectively, and represent the results obtained by testing ASTM standard specimens taken parallel to a rolling direction. Hardness was measured using a micro-vickers tester on the surface of the steel sheet, and here, a load of 500g was applied, the analysis area was 20mm × 10mm, and a total of 50 locations were measured at 2mm intervals. The minimum measured hardness values are listed here.

**[Table 3]**

| Spec imen No. | Stee l grad e | Thic knes s (mm) | Relation al Expressi on 2 | Microstructure (area%) | | | Physical properties | | | | Classificati on |
|---|---|---|---|---|---|---|---|---|---|---|---|
| | | | R2 | F | B | M | TS (MPa) | El (%) | TSxEl (MPa%) | Surface hardness (Hv) | |
| 1 | A | 1.2 | 0.204 | 75 | 11 | 14 | 688 | 24 | 16512 | 199 | Inventive Example 1 |
| 2 | B | 1.2 | 0.192 | 77 | 8 | 15 | 679 | 25 | 16975 | 178 | Inventive Example 2 |
| 3 | C | 1.3 | 0.208 | 72 | 12 | 16 | 819 | 21 | 17199 | 233 | Inventive Example 3 |
| 4 | D | 1.7 | 0.329 | 69 | 11 | 20 | 837 | 20 | 16740 | 250 | Inventive Example 4 |
| 5 | E | 1.4 | 0.362 | 67 | 18 | 15 | 854 | 19 | 16226 | 255 | Inventive Example 5 |
| 6 | F | 1.2 | 0.756 | 60 | 15 | 25 | 732 | 19 | 13908 | 214 | Comparative Example 1 |
| 7 | G | 1.2 | 0.036 | 77 | 4 | 19 | 632 | 25 | 15800 | 154 | Comparative Example 2 |
| 8 | H | 1.2 | 0.246 | 88 | 5 | 7 | 510 | 28 | 14280 | 135 | Comparative Example 3 |
| 9 | I | 1.2 | 0.262 | 60 | 17 | 23 | 718 | 19 | 13642 | 211 | Comparative Example 4 |
| 10 | J | 1.2 | 0.242 | 90 | 5 | 5 | 533 | 27 | 14391 | 151 | Comparative Example 5 |

| | | | | | | | | | | | |
|---|---|---|---|---|---|---|---|---|---|---|---|
| * F: Ferrite, B: Bainite, M: Martensite [Relational Expression 2 ] | | | | | | | | | | | |

$R 2 = \left(\left[{Cr}_{0.5 μm}\right]+\left[{Ni}_{0.5 μm}\right]\right) - \left(\left[{Cr}_{1 / 4}\right]-\left[{Ni}_{1 / 4}\right]\right)$
(In Equation, [Cr_{0.5µm}] and [Ni_{0.5µm}] are the maximum wt% of each element in a region from the surface of the steel sheet to a point of 0.5µm in the thickness direction, and [Cr_{1/4}] and [Ni_{1/4}] are the average wt% of each element at a point of 1/4 in the thickness direction of the steel sheet.)

As shown in Table 3 above, in the case of Inventive Examples satisfying the alloy composition and manufacturing conditions of the present disclosure, the microstructural characteristics proposed in the present disclosure were satisfied, and the physical properties intended in the present disclosure were also secured.

On the other hand, Comparative Example 1 is an example in which the R1 value of Relational Expression 1 exceeds the range of the present disclosure. As a result, the R2 value of Relational Expression 2 was also excessively high, and martensite and bainite were excessively formed. Consequently, the desired product value of tensile strength and elongation was not secured.

Comparative Example 2 is an example in which the R1 value of Relational Expression 1 falls short of the range of the present disclosure. Consequently, the R2 value of Relational Expression 2 was also insufficient, and the desired hardness value was not secured.

Comparative Examples 3 to 5 are examples in which the alloy composition conditions proposed in the present disclosure are satisfied, but the annealing conditions are not satisfied. Comparative Example 3 is a case in which the line speed during annealing falls short of the proposed range, and sufficient strength was not secured due to excessive ferrite formation. In addition, the surface hardness value was also inferior. Comparative Example 4 is an example in which the annealing temperature exceeded the range of the present disclosure, in which as sufficient ferrite was not secured, the formation of martensite and bainite in the final microstructure was excessive. Consequently, it was confirmed that the elongation was significantly inferior. Comparative Example 5 is an example in which the annealing temperature fell short of the range of the present disclosure. As a result, the austenite required for the formation of martensite and bainite was insufficient, leading to an excessive ferrite fraction in the final microstructure. Consequently, it was confirmed that the strength and surface hardness values also failed to satisfy the proposed levels.

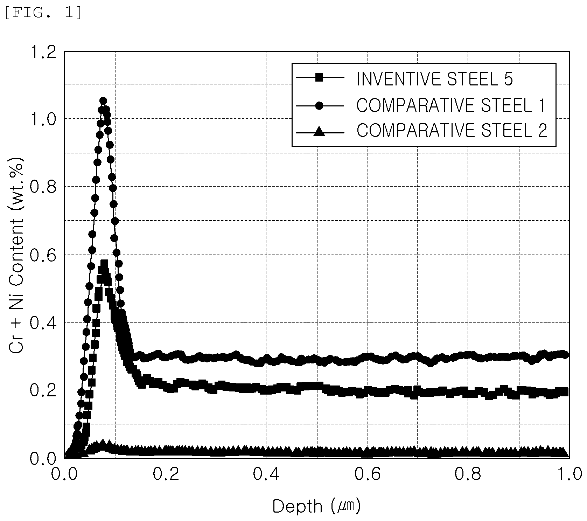

FIG. 1 is a graph illustrating the sum of Cr and Ni contents according to the depth in the thickness direction from the surface of the steel sheets of Inventive Example 5, Comparative Example 1, and Comparative Example 2, according to an embodiment of the present disclosure.

Compared to Comparative Examples 1 and 2, Inventive Example 5 shows that the maximum value of the sum of Cr and Ni contents in the region up to a point of 0.5 µm from the surface of the steel is distributed within an appropriate range. On the other hand, Comparative Example 1 showed a maximum value exceeding 1%, failing to satisfy Relational Expression 2. Comparative Example 2 showed a maximum value of approximately 0.04%, confirming that Cr and Ni were not sufficiently enriched in the surface layer portion.

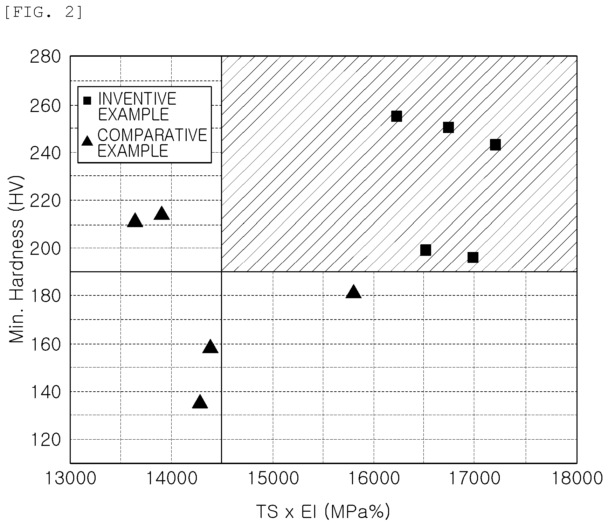

FIG. 2 shows a distribution of minimum surface hardness values for the product of tensile strength and elongation of Inventive Example and Comparative Example according to an embodiment of the present disclosure. It may be confirmed that Inventive Example according to an embodiment of the present disclosure satisfies both the product of tensile strength and elongation and the surface hardness value proposed in the present disclosure.

Although the present disclosure has been described in detail through the embodiments above, embodiments of other forms are also possible. Therefore, the technical concept and scope of the claims described below are not limited to the embodiments.

## Claims

1. A cold-rolled steel sheet comprising:
by wt%, 0.050 to 0.150% of C, 0.010 to 1.100% of Si, 1.000 to 3.000% of Mn, 0.001 to 0.050% of P, 0.001 to 0.020% of S, 0.020 to 0.300% of Cr, 0.010 to 0.100% of Ni, 0.01 to 0.10% of Sol.Al, 0.010 to 0.400% of Cu, and 0.0010 to 0.0100% of N, a remainder of Fe and unavoidable impurities,
wherein an R1 value defined in Relational Expression 1 below is 2.000 to 4.000, and
a microstructure includes, in area%, 65 to 80% ferrite and a residual structure, [Relatioanl Expression 1] $R 1 = 17 \left(\left[Cr\right]+\left[Ni\right]\right) / \left[Si\right]$
where [Cr], [Ni], and [Si] are the wt% of each element.

2. The cold-rolled steel sheet of claim 1, wherein the cold-rolled steel sheet further comprises, by wt%, a total of 1.0% or less of one or more of Mo, Nb, and Sb.

3. The cold-rolled steel sheet of claim 1, wherein the cold-rolled steel sheet further comprises, by wt%, 0.003% or less of B.

4. The cold-rolled steel sheet of claim 1, wherein
an R2 value defined in Relational Expression 2 is 0.150 to 0.500, [Relatioanl Expression 2] $R 2 = \left(\left[{Cr}_{0.5 μm}\right]+\left[{Ni}_{0.5 μm}\right]\right) - \left(\left[{Cr}_{1 / 4}\right]-\left[{Ni}_{1 / 4}\right]\right)$
where [Cr_{0.5µm}] and [Ni_{0.5µm}]are the maximum wt% of each element in a region from a surface of the steel sheet to a point of 0.5µm in a thickness direction, and [[Cr_{1/4}] and [Ni_{1/4}] are average wt% of each element at a point of 1/4 in the thickness direction of the steel sheet.

5. The cold-rolled steel sheet of claim 1, wherein the residual structure includes one or more of martensite and bainite.

6. The cold-rolled steel sheet of claim 1, wherein the residual structure includes, by area%, 10 to 35% of martensite and remaining bainite.

7. The cold-rolled steel sheet of claim 1, wherein the cold-rolled steel sheet has a tensile strength (TS) of 590 MPa or more, and a product of tensile strength (TS) and elongation (El) is 14500 MPa% or more.

8. The cold-rolled steel sheet of claim 1, wherein the cold-rolled steel sheet has a minimum surface hardness value of 170 Hv or higher.

9. The cold-rolled steel sheet of claim 1, further comprising a zinc plating layer on one surface.

10. A method of manufacturing a cold-rolled steel sheet, the method comprising:
reheating a steel slab comprising, by wt%, 0.050 to 0.150% of C, 0.010 to 1.100% of Si, 1.000 to 3.000% of Mn, 0.001 to 0.050% of P, 0.001 to 0.020% of S, 0.020 to 0.300% of Cr, 0.010 to 0.100% of Ni, 0.01 to 0.10% of Sol.Al, 0.010 to 0.400% of Cu, and 0.0010 to 0.0100% of N, a remainder of Fe and unavoidable impurities and having an R1 value of 2.000 to 4.000 as defined in Relational Expression 1 below;
hot rolling the reheated steel slab;
coiling the hot-rolled steel sheet;
cold-rolling the coiled steel sheet; and
annealing by heating and maintaining the cold-rolled steel sheet within a temperature range of Ac1 to Ac3+100°C, and then cooling the steel sheet to 350°C or lower at a line speed of 70 to 200 mpm, [Relatioanl Expression 1] $R 1 = 17 \left(\left[Cr\right]+\left[Ni\right]\right) / \left[Si\right]$
where [Cr], [Ni], and [Si] are the wt% of each element.

11. The method of claim 10, wherein the steel slab further comprises, by wt%, one or more of Mo, Nb, and Sb in a total amount of 1.0% or less.

12. The method of claim 10, wherein the steel slab further comprises, by wt%, 0.003% or less of B.

13. The method of claim 10, wherein
the reheating is performed in a temperature range of 1000 to 1350°C,
the hot rolling is performed at a finishing hot rolling temperature of 800 to 1000°C,
the coiling is performed in a temperature range of 550 to 650°C, and
the cold rolling is performed with a reduction rate of 30% or more.

14. The method of claim 10, further comprising galvanizing the annealed steel sheet.
